# EUROPEAN PATENT SPECIFICATION

(11) **EP 3 479 917 B1**
(45) Date of publication and mention of the grant of the patent: **18.05.2022**
(21) Application number: 17200001.0
(22) Date of filing: 03.11.2017
(51) Int. Cl.: B21C 37/12, F16L 9/06, F16L 9/16

(54) **METHOD AND APPARATUS FOR FORMING A METAL STRIP**
VERFAHREN UND VORRICHTUNG ZUR UMFORMUNG EINES METALLBANDES
PROCÉDÉ ET DISPOSITIF POUR FORMER UNE BANDE MÉTALLIQUE

(43) Date of publication of application: 08.05.2019
(73) Proprietor: Pacific Roller Die Company, Inc., Hayward CA 94545 (US)
(72) Inventor: MILLER, Robert F., Lafayette, California 94549 (US); GERSTEN, Garrett C., Livermore, California 94551 (US); HINCKLEY, Sr., Russell L., Modesto, California 95351 (US); KRAUT, Michael F., Oklahoma City OK 73104 (US)
(74) Representative: HGF

(56) References cited:
- WO-A1-95/30854
- KR-A- 20140 040 470
- US-A- 3 857 159
- US-A- 5 158 115
- US-A1- 2008 072 642

## Description

### BACKGROUND OF THE INVENTION

The words "pipe" and "tube" are used interchangeably here.

This invention relates to relatively small diameter pipes or tubes and in particular to tubular cores on which sheets of metal or other material can be wound for shipment, handling and dispersal. As used here, the word dispersal includes mounting a core and a sheet wound thereon on an uncoiler, then rotating the core to unwind the sheet and feed the sheet to apparatus for forming the sheet into other goods (beverage cans, automotive body parts, etc.).

Cores comprising paper or cardboard and glue are widely used for the above purposes. For example, beverage can stock material can be manufactured using cores which are formed to various diameters, for example, inside diameters of 41cm, 51cm or 61cm (16", 20" or 24"), from paper fiber about 1.3cm to 2.5cm (0.5" to 1" thick). These cores are non-recyclable and must be disposed of in dumps or landfills, with the attendant cost and detrimental impact on the environment. These cores can be crushed to facilitate storage and disposal, but this can be a problem because of their bulk and the difficulty in crushing them.

Tubes or pipes formed from metal strips are known in the art. See, for example, commonly assigned US patent nos. 3,940,962 and 3,247,692 in the name of Paul K. Davis, which disclose the so-called three-roll free forming method and apparatus for forming pipes. According to these patents, an elongated strip of metal is advanced in a generally planar path along its longitudinal axis and into forming stands which form the strip into a profile, then the profiled strip is fed into a tube forming machine at which the strip is curled or wrapped between three sets of rollers (lead, mandrel and buttress rollers) into helical tubes. The sets of rollers extend in rows at an angle relative to the longitudinal axis of the incoming strip, the helix angle, which is so related to the radius of the helical convolutions and the width of the incoming strip that the trailing edge of a preceding portion of the strip converges into contact with the leading edge of the following portion of the strip. The '962 patent also teaches diameter control. The tubes formed in accordance with the '692 and '962 patents are used in a variety of applications. Metal tubes or pipes have the potential for use as small diameter recyclable cores, but to date their use has been limited because of the difficulty of forming metal into small diameter tubes. For a given sheet thickness, smaller diameter tubes require greater force to deform the sheet and form the pipe. Also, decreasing the thickness of the tube wall (the thickness of the tube-forming sheet or strip) increases the tendency to buckle. In addition, it is more difficult to control the diameter and to maintain a consistent lockseam as the tube is formed.

Commonly assigned US patent no. 5,074,138 in the name of Robert F. Miller describes an improvement of the invention disclosed in US patent no. 3,247,692. The improvement involves the design and manufacture of a lockseam pipe which has a corrugated, sinusoidal profile comprising arcuate/semi-circular ridges and grooves, and which is adapted for improving the physical characteristics of the pipe and the strength of the lockseam.

US2008072642A1, which is considered the closest prior art, shows a method comprising passing an elongated metal strip having width and length and opposite longitudinal edges through a multiplicity of forming stands of forming rolls, wherein upon the completion of the corrugation forming process the strip has a rectangular ribbed profile that comprises longitudinally extending, alternating ridges and grooves having generally vertical spaced-apart sidewalls with the ridges further comprising longitudinally extending, flat, spaced-apart top surfaces extending between adjacent ridge sidewalls and the grooves further comprising longitudinally extending, flat, spaced-apart bottom surfaces extending between adjacent groove sidewalls, the flat ridges and flat grooves together forming a rectangular, flat ribbed cross sectional profile extending along the width of the strip transverse to the length thereof; forming the opposite longitudinal edges of the as-formed corrugated metal strip into flanges adapted for forming an interlocking seam; helically coiling the as-formed corrugated strip into a cylinder having a longitudinal axis and an outer surface defined by flat, spaced-apart surfaces selected from the top surfaces and the bottom surfaces; and compressing the opposite edge flanges together thereby forming an interlocking seam extending in a spiral around the cylinder along the longitudinal axis thereof.

KR20140040470A relates to a connection structure for a corrugated steel pipe and a connecting method thereof, which increase the water tightness of a lock seam connection unit in a corrugated steel pipe that is manufactured by winding a steel plate in a spiral shape and connecting the boundary part of the steel plate through lock seam. In other words, lock seam connection is established by winding a steel plate in a spiral shape and bending the boundary part of the wound steel plate and the end part of the steel plate in order to perform mutual bonding on the both side bonding cross sections. The steel plate body with a lock seam connection structure is composed of a corrugated steel pipe where multiple ribs protrude in a spiral shape from the circumference thereof in a longitudinal direction. In addition, a packing is inserted between the both bonding cross sections for sealing in order to increase the water tightness of the lock seam connection unit.

WO9530854A1 relates to a relatively small diameter spirally wound metal pipe having an elongate sheet of ductile material formed in a helical configuration including a radially extending lock seam joining opposite edge portions of the elongate sheet together. The gauge thickness of the ductile material, the radial height of the lock seam, and the distance between adjacent lock seams are specifically sized and configured to provide a resultant pipe which optimizes the load bearing capacity of the pipe while minimizing the cost and weight thereof. The lock seam is formed by a radially extending first U-shaped member formed along the first edge portion thereof and a radially extending second U-shaped member formed along the second edge portion thereof which are crimped together such that the second U-shaped member substantially envelops the first U-member to lock the first and second edge portions together.

US5158115A relates to a bellows pipe construction and method for manufacturing. Helically wound coils of longitudinally corrugated strip are joined with an interlocking seam. Thereafter, the interlocking seam is deformed to position the edges of the strip in substantial parallelism with the axis of the pipe.

### SUMMARY OF THE INVENTION

The present invention is embodied in the method for forming a metal strip of claim 1 and the apparatus for forming a metal strip of claim 8. Preferred embodiments are defined in the dependent claims.

### BRIEF DESCRIPTION OF THE DRAWING

Fig. 1 is a transverse cross-section of a metal strip having a rectangular corrugated transverse profile formed therein in accordance with the present invention, and preparatory to the strip being helically wound into a tubular core.
Fig. 2 depicts a strip such as that of Fig. 1 being wound into a helical tubular core.
Fig. 3 is a transverse cross-section of two adjacent windings of a strip such as that of Fig. 1 where the strip is helically wound to form a core such as that of Fig. 2, and the leading edge of one winding of the strip is joined by a lockseam to the trailing edge of the ajdacemt winding.
Figs. 4-13 depict the changes in the profile of a strip or sheet at sequential stages of the profile-forming process.

### DETAILED DESCRIPTION

The pipe forming in accordance with the present invention can be achieved via fixed forming using a forming shoe with a predetermined inside diameter to provide the desired pipe diameter, or by free forming using several sets of roller dies of different sizes to achieve pipes of different diameters, by adjusting the helix angle or by a combination thereof.

The illustrative equipment and process described here use, and are improvements of, the multi-pass roll former, three roll, free forming system disclosed in commonly assigned US patent nos. 3,940,962 and 3,247,692 as specifically adapted to bellows pipe (relatively small diameter corrugated pipe) in commonly assigned US patent no. 5,074,138.

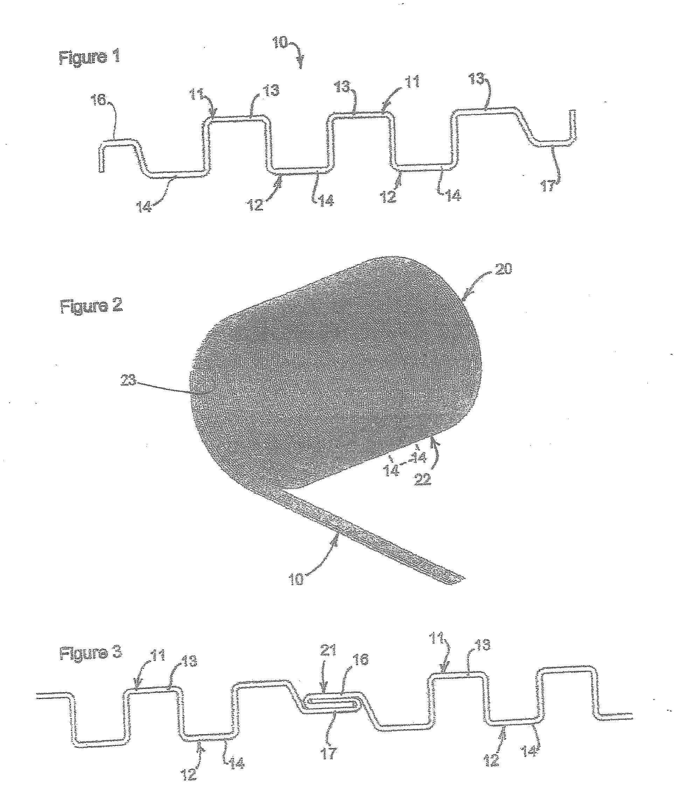

According to the present invention and referring to Figure 1, initially a flat metal strip or sheet is roll-formed to a desired profile.

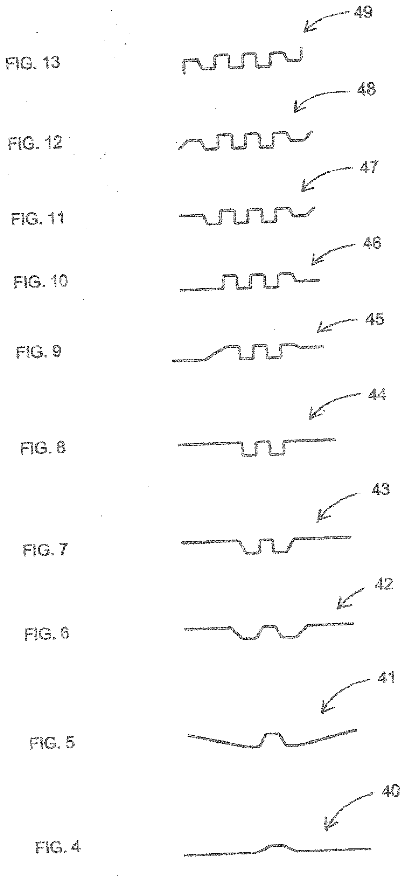

Referring to Figures 4-13, according to the present invention, a flat metal strip or sheet is passed through multiple stands of forming rolls to initially form rectangular features and/or straight line segments of rectangular features and to progressively add to and refine these segments and features to form the desired rectangular ribbed profile. More specifically, Figures 4-13 depict the sequence of changes in the strip profile starting with the initial flat strip profile and progressing through the finished rectangular ribbed profile. The ten Figures 4-13 depict the associated profiles 40-49 after the strip is driven through each of the ten stands of forming rollers. Illustratively, ten passes through roll-forming stands are used to form the profile.

The above profile-forming method results in the profile 10 shown in Figure 1 which comprises alternating rectangular ribs in the form of rectangular ridges 11 and rectangular grooves 12. The ridges 11 have flat top or upper surfaces 13 and the grooves 12 have flat bottom or lower surfaces 14. A downward (or upward) opening flange or tab 16 is formed extending along one longitudinal edge of the strip or sheet transverse to the width of the strip and an opposite opening upward (or downward) extending tab 17 is formed extending along the opposite longitudinal edge of the strip.

To form the profiled strip into a tube or core, and referring to Figure 2, the rectangular-ribbed profile strip or sheet 10 is wrapped using helical foorming apparatus into a cylindrical pipe or core 20 of the desired diameter and, as shown in Figure 3, the mating tabs 16 and 17 are compressed together to form a four-ply interlocked helical seam 21 which wraps around the pipe lengthwise along the pipe. The strip edges are held together via a continuous mechanical lockseam which is pushed together to lock the lockseam.

In the formed pipe 20, the spaced-apart adjacent flat surfaces 14 of the rectangular grooves/ribs 12 form the outside surface 22 of the core 20 and the spaced-apart flat surfaces 13 of the rectangular ridges/ribs 11 form the inside surface 23 of the core.

The strip 10 illustrated in Figure 1 is symmetrical top-to-bottom and thus can be reversed top-to-bottom during the pipe wrapping process depicted in Figure 2. Then the spaced-apart flat ridge/rib surfaces 13 form the outer surface 22 of the core and the spaced-apart flat groove/rib surfaces 14 form the inside surface of the core.

Referring to the Figure 3 cross-section of the core 20 depicted in Figure 2, in the pipes made in accordance with the present invention, the ridges and grooves maintain their generally rectangular, ribbed shape and form an open structure with spacing between the adjacent ridges 11 as well as spacing between the adjacent grooves 12. This is unlike prior designs which use non-rectangular shapes and/or an additional deformation step to form a continuous outer surface in order to provide the required strength and integrity and to provide ample flat surface area for sheet support. The outer surface is interrupted by the spacing of the inside rectangles. In a present embodiment, the width of the ridges and the grooves, and the spacing between adjacent ridges and between adjacent grooves, are all equal.

Embossments or reinforced embossments can be formed in the ribs, e.g., in the vertical legs of the ribs, to provide additional strength to the core.

### Examples

The above design and method have been used to form cylindrical cores of different sizes.

Specifically, in strips or sheets 10 of aluminum which were 0.25mm to 0.58mm (0.010" to 0.023") thick and 9.21cm (3 5/8") wide, ridges 11 and grooves 12 were formed which were 7mm (0.27") in height from the top of the a ridge to the bottom of the adjacent groove. Both the ridges and the grooves were 7mm (0.27") wide and were spaced apart 7mm (0.27") from adjacent ridges and grooves, respectively. See Figure 1. The rectangular corrugated strips or sheets 10 were fed to three-roll apparatus using helix angles ≥ 60° measured from the axis of the outgoing pipe to form continuous length pipes of 41cm, 51cm and 61cm (16", 20" and 24") inside diameters. The pipes 20 were then cut into various lengths for use as recyclable cores onto which sheets of metal such as aluminum were to be wound for handling and dispersal.

Other dimensions and materials will be readily adapted to the invention described here by those of usual skill in the art. For example the invention can be used to form pipes approximately 15cm (6") in diameter and greater. For a given sheet width, increasing the helix angle increases the pipe diameter. For a given pipe diameter, increasing the sheet width reduces the required helix angle. Increasing the strip width tends to increase the pipe wrapping/manufacturing speed and to decrease the number of seams in a given length of pipe.

## Claims

1. A method for forming a metal strip (10) into a cylindrical core (20), comprising:
passing an elongated metal strip having width and length and opposite longitudinal edges through a multiplicity of forming stands of forming rolls which form rectangular components and generally straight segments thereof in said strip and change the size and shape of the segments and components previously formed at said forming stands, wherein upon the completion of the corrugation forming process the strip has a rectangular ribbed profile that comprises longitudinally extending, alternating ridges (11) and grooves (12) having generally vertical spaced-apart sidewalls with the ridges (11) further comprising longitudinally extending, flat, spaced-apart top surfaces (13) extending between adjacent ridge sidewalls and the grooves (12) further comprising longitudinally extending, flat, spaced-apart bottom surfaces (14) extending between adjacent groove sidewalls, the flat ridges (11) and flat grooves (12) together forming a rectangular, flat ribbed cross sectional profile extending along the width of the strip transverse to the length thereof, wherein the multiplicity of forming stands are to initially form rectangular features and/or straight line segments of rectangular features and to progressively add rectangular features or straight line segments to the rectangular features or straight line segments and to refine the rectangular features and straight line segments to form the ridges and grooves, wherein each of the forming stands is to form rectangular components or generally straight segments thereof in said strip;
forming the opposite longitudinal edges of the as-formed corrugated metal strip into flanges (16, 17) adapted for forming an interlocking seam (21);
helically coiling the as-formed corrugated strip into a cylinder having a longitudinal axis and an outer surface defined by flat, spaced-apart surfaces selected from the top surfaces (13) and the bottom surfaces (14); and
compressing the opposite edge flanges (16, 17) together thereby forming an interlocking seam (21) extending in a spiral around the cylinder along the longitudinal axis thereof.

2. The method of claim 1 wherein the metal strip is aluminum and is 0.13 mm, 0.005", to 1.27 mm, 0.050", thick.

3. The method of any of claims 1 and 2 wherein during the helical coiling step, the metal strip is oriented at a helix angle of approximately 60° or greater relative to the longitudinal axis.

4. The method of any of claims 1 and 2 wherein during the helical coiling step, the metal strip is oriented at a helix angle relative to the longitudinal axis selected for forming a cylinder having a diameter of at least approximately 15 cm, 6",.

5. The method of claim 1 wherein the metal strip is an aluminum strip and prior to forming the cylinder the aluminum strip is approximately 0.3 mm to 0.6 mm, 0.010" to 0.023", thick and approximately 9.21 cm, 3 5/8", wide; the vertical dimension between adjacent top and bottom surfaces of the as-formed cylinder is approximately 7 mm, 0.27"; the width of the flat ridge surfaces is approximately 7 mm, 0.27", the distance between adjacent flat ridge surfaces is approximately 7 mm, 0.27"; the width of the flat groove surfaces is approximately 7 mm, 0.27", the distance between adjacent flat ridge surfaces is approximately 7 mm, 0.27"; and the diameter of the cylinder is within the range approximately 41 cm to 61 cm, 16" - 24".

6. The method of claim 1, wherein the as-formed corrugated metal strip is symmetrical top-to-bottom.

7. The method of claim 1, wherein the width of the ridges and the grooves, and the spacing between adjacent ridges and between adjacent grooves are all equal.

8. An apparatus for forming a metal strip (10) into a cylindrical core (20), comprising:
a multiplicity of forming stands of forming rolls arranged such that when an elongated metal strip having width and length and opposite longitudinal edges is passed through the multiplicity of forming stands, the multiplicity of forming stands form rectangular components and generally straight segments thereof in said strip and change the size and shape of the segments and components previously formed at said forming stands, wherein upon the completion of the corrugation forming process the strip has a rectangular ribbed profile that comprises longitudinally extending, alternating ridges (11) and grooves (12) having generally vertical spaced-apart sidewalls with the ridges (11) further comprising longitudinally extending, flat, spaced-apart top surfaces (13) extending between adjacent ridge sidewalls and the grooves (12) further comprising longitudinally extending, flat, spaced-apart bottom surfaces (14) extending between adjacent groove sidewalls, the flat ridges (11) and flat grooves (12) together forming a rectangular, flat ribbed cross sectional profile extending along the width of the strip transverse to the length thereof, wherein the multiplicity of forming stands are arranged to initially form rectangular features and/or straight line segments of rectangular features and to progressively add rectangular features or straight line segments to the rectangular features or straight line segments and to refine the rectangular features or straight line segments to form the ridges and grooves, wherein each of the forming stands is to form rectangular components or generally straight segments thereof in said strip;
means to form the opposite longitudinal edges of the as-formed corrugated metal strip into flanges (16, 17) adapted for forming an interlocking seam (21);
means for helically coiling the as-formed corrugated strip into a cylinder having a longitudinal axis and an outer surface defined by flat, spaced-apart surfaces selected from the top surfaces (13) and the bottom surfaces (14); and
means for compressing the opposite edge flanges (16, 17) together thereby forming an interlocking seam (21) extending in a spiral around the cylinder along the longitudinal axis thereof.

9. The apparatus of claim 8, wherein the multiplicity of forming stands of forming rolls is arranged such that the as-formed corrugated metal strip is symmetrical top-to-bottom, or wherein the width of the ridges and the grooves, and the spacing between adjacent ridges and between adjacent grooves are all equal.

## Patentansprüche

1. Verfahren zum Formen eines Metallstreifens (10) zu einem zylindrischen Kern (20), umfassend:
Führen eines länglichen Metallstreifens, der Breite und Länge und gegenüberliegende Längskanten aufweist, durch eine Vielzahl von Formgerüsten von Formwalzen, die rechteckige Komponenten und im Allgemeinen gerade Segmente davon in dem Streifen formen und die Größe und Gestalt der Segmente und Komponenten ändern, die zuvor an den Formgerüsten geformt wurden, wobei bei der Fertigstellung des Wellenformprozesses der Streifen ein rechteckiges geripptes Profil aufweist, das sich längs erstreckende, abwechselnde Rippen (11) und Rillen (12) umfasst, die im Allgemeinen vertikal beabstandete Seitenwände aufweisen, wobei die Rippen (11) ferner sich längs erstreckende, flache, beabstandete obere Oberflächen (13) umfassen, die sich zwischen benachbarten Rippenseitenwänden erstrecken und die Rillen (12) ferner sich längs erstreckende, flache, beabstandete untere Oberflächen (14) umfassen, die sich zwischen benachbarten Rillenseitenwänden erstrecken, wobei die flachen Rippen (11) und die flachen Rillen (12) zusammen ein rechteckiges, flaches geripptes Querschnittsprofil formen, das sich entlang der Breite des Streifens quer zu der Länge davon erstreckt, wobei die Vielzahl von Formgerüsten dazu dient, anfänglich rechteckige Merkmale und/oder geradlinige Segmente von rechteckigen Merkmalen zu formen und schrittweise rechteckige Merkmale oder geradlinige Segmente zu den rechteckigen Merkmalen oder geradlinigen Segmenten hinzuzufügen und die rechteckigen Merkmale und geradlinigen Segmente zu verfeinern, um die Rippen und Rillen zu formen, wobei jedes der Formgerüste dazu dient, rechteckige Komponenten oder im Allgemeinen gerade Segmente davon in dem Streifen zu formen;
Formen der gegenüberliegenden Längskanten des so geformten gewellten Metallstreifens zu Flanschen (16, 17), die zum Formen einer ineinandergreifenden Naht (21) ausgelegt sind;
spiralförmiges Aufwickeln des so geformten gewellten Streifens zu einem Zylinder, der eine Längsachse und eine äußere Oberfläche aufweist, die durch flache, beabstandete Oberflächen definiert ist, die aus den oberen Oberflächen (13) und den unteren Oberflächen (14) ausgewählt sind; und
Zusammenpressen der gegenüberliegenden Kantenflansche (16, 17), wodurch eine ineinandergreifende Naht (21) geformt wird, die sich in einer Spirale um den Zylinder entlang der Längsachse davon erstreckt.

2. Verfahren nach Anspruch 1, wobei der Metallstreifen Aluminium ist und 0,13 mm, 0,005", bis 1,27 mm, 0,050", dick ist.

3. Verfahren nach einem der Ansprüche 1 und 2, wobei während des Schrittes des spiralförmigen Aufwickelns der Metallstreifen in einem Spiralwinkel von ungefähr 60 ° oder mehr relativ zu der Längsachse ausgerichtet ist.

4. Verfahren nach einem der Ansprüche 1 und 2, wobei während des Schrittes des spiralförmigen Aufwickelns der Metallstreifen in einem Spiralwinkel relativ zu der Längsachse ausgerichtet ist, der zum Formen eines Zylinders ausgewählt ist, der einen Durchmesser von zumindest ungefähr 15 cm, 6", aufweist.

5. Verfahren nach Anspruch 1, wobei der Metallstreifen ein Aluminiumstreifen ist und vor dem Formen des Zylinders der Aluminiumstreifen ungefähr 0,3 mm bis 0,6 mm, 0,010" bis 0,023", dick und ungefähr 9,21 cm, 3 5/8", breit ist, die vertikale Abmessung zwischen benachbarten oberen und unteren Oberflächen des so geformten Zylinders ungefähr 7 mm, 0,27", ist, die Breite der flachen Rippenoberflächen ungefähr 7 mm, 0,27", ist, der Abstand zwischen benachbarten flachen Rippenoberflächen ungefähr 7 mm, 0,27", ist; die Breite der flachen Rillenoberflächen ungefähr 7 mm, 0,27", ist, der Abstand zwischen benachbarten flachen Rippenoberflächen ungefähr 7 mm, 0,27", ist; und der Durchmesser des Zylinders innerhalb des Bereichs von ungefähr 41 cm bis 61 cm, 16"-24", ist.

6. Verfahren nach Anspruch 1, wobei der so geformte gewellte Metallstreifen von oben nach unten symmetrisch ist.

7. Verfahren nach Anspruch 1, wobei die Breite der Rippen und der Rillen und der Abstand zwischen benachbarten Rippen und zwischen benachbarten Rillen alle gleich sind.

8. Vorrichtung zum Formen eines Metallstreifens (10) zu einem zylindrischen Kern (20), umfassend:
eine Vielzahl von Formgerüsten von Formwalzen, die angeordnet sind, sodass, wenn ein länglicher Metallstreifen, der Breite und Länge und gegenüberliegende Längskanten aufweist, durch die Vielzahl von Formgerüsten geführt wird, die Vielzahl von Formgerüsten rechteckige Komponenten und im Allgemeinen gerade Segmente davon in dem Streifen formen und die Größe und Gestalt der Segmente und Komponenten ändern, die zuvor an den Formgerüsten geformt wurden, wobei bei der Fertigstellung des Wellenformprozesses der Streifen ein rechteckiges geripptes Profil aufweist, das sich längs erstreckende abwechselnde Rippen (11) und Rillen (12) umfasst, die im Allgemeinen vertikal beabstandete Seitenwände aufweisen, wobei die Rippen (11) ferner sich längs erstreckende, flache, beabstandete obere Oberflächen (13) umfassen, die sich zwischen benachbarten Rippenseitenwänden erstrecken, und die Rillen (12) ferner sich längs erstreckende, flache, beabstandete untere Oberflächen (14) umfassen, die sich zwischen benachbarten Rillenseitenwänden erstrecken, wobei die flachen Rippen (11) und die flachen Rillen (12) zusammen ein rechteckiges, flaches geripptes Querschnittsprofil formen, das sich entlang der Breite des Streifens quer zu der Länge davon erstreckt, wobei die Vielzahl von Formgerüsten angeordnet ist, um anfänglich rechteckige Merkmale und/oder geradlinige Segmente von rechteckigen Merkmalen zu formen und um schrittweise rechteckige Merkmale oder geradlinige Segmente zu den rechteckigen Merkmalen oder geradlinigen Segmenten hinzuzufügen und um die rechteckigen Merkmale oder die geradlinigen Segmente zu verfeinern, um die Rippen und Rillen zu formen, wobei jedes der Formgerüste dazu dient, rechteckige Komponenten oder im Allgemeinen gerade Segmente davon in dem Streifen zu formen;
Mittel zum Formen der gegenüberliegenden Längskanten des so geformten gewellten Metallstreifens zu Flanschen (16, 17), die zum Formen einer ineinandergreifenden Naht (21) ausgelegt sind;
Mittel zum spiralförmigen Aufwickeln des so geformten gewellten Streifens zu einem Zylinder, der eine Längsachse und eine äußere Oberfläche aufweist, die durch flache, beabstandete Oberflächen definiert ist, die aus den oberen Oberflächen (13) und den unteren Oberflächen (14) ausgewählt sind; und
Mittel zum Zusammenpressen der gegenüberliegenden Kantenflansche (16, 17), wodurch eine ineinandergreifende Naht (21) geformt wird, die sich in einer Spirale um den Zylinder entlang der Längsachse davon erstreckt.

9. Vorrichtung nach Anspruch 8, wobei die Vielzahl von Formgerüsten von Formwalzen angeordnet ist, sodass der so geformte gewellte Metallstreifen von oben nach unten symmetrisch ist, oder wobei die Breite der Rippen und der Rillen und der Abstand zwischen benachbarten Rippen und zwischen benachbarten Rillen alle gleich sind.

## Revendications

1. Procédé de formation d'une bande métallique (10) en un mandrin cylindrique (20), comprenant :
le passage d'une bande métallique allongée ayant une largeur et une longueur et des bords longitudinaux opposés à travers une multiplicité de cages de formage de rouleaux de formage qui forment des composants rectangulaires et des segments globalement droits de ceux-ci en ladite bande et modifient la taille et la forme des segments et composants préalablement formés au niveau desdites cages de formage, dans lequel, à la fin du processus de formage d'ondulations, la bande a un profil à nervures rectangulaires qui comprend des arêtes (11) et des rainures (12) alternées s'étendant longitudinalement ayant des parois latérales espacées globalement verticales, les arêtes (11) comprenant en outre des surfaces supérieures (13) espacées, plates, s'étendant longitudinalement s'étendant entre des parois latérales d'arêtes adjacentes et les rainures (12) comprenant en outre des surfaces inférieures (14) espacées, plates, s'étendant longitudinalement s'étendant entre des parois latérales de rainures adjacentes, les arêtes plates (11) et rainures plates (12) formant ensemble un profil en coupe transversale à nervures plates rectangulaires s'étendant le long de la largeur de la bande transversalement à la longueur de celle-ci, dans lequel la multiplicité des cages de formage doivent former initialement des éléments rectangulaires et/ou des segments en ligne droite d'éléments rectangulaires et ajouter progressivement des éléments rectangulaires ou des segments en ligne droite aux éléments rectangulaires ou segments en ligne droite et affiner les éléments rectangulaires et les segments en ligne droite pour former les arêtes et les rainures, dans lequel chacune des cages de formage doit former des composants rectangulaires ou des segments globalement droits de ceux-ci dans ladite bande ;
le formage des bords longitudinaux opposés de la bande métallique ondulée ainsi formée en collerettes (16, 17) adaptées pour former un joint de verrouillage (21) ;
l'enroulement hélicoïdal de la bande ondulée ainsi formée en un cylindre ayant un axe longitudinal et une surface extérieure définie par des surfaces espacées, plates, choisies parmi les surfaces supérieures (13) et les surfaces inférieures (14) ; et
la compression des collerettes (16, 17) de bords opposés les unes avec les autres pour former de la sorte un joint de verrouillage (21) s'étendant en spirale autour du cylindre le long de l'axe longitudinal de celui-ci.

2. Procédé selon la revendication 1, dans lequel la bande métallique est en aluminium et a une épaisseur de 0,13 mm, 0,005" à 1,27 mm, 0,050".

3. Procédé selon l'une quelconque des revendications 1 et 2, dans lequel pendant l'étape d'enroulement hélicoïdal, la bande métallique est orientée selon un angle d'hélice d'environ 60° ou plus par rapport à l'axe longitudinal.

4. Procédé selon l'une quelconque des revendications 1 et 2, dans lequel pendant l'étape d'enroulement hélicoïdal, la bande métallique est orientée selon un angle d'hélice par rapport à l'axe longitudinal sélectionné pour former un cylindre ayant un diamètre d'au moins environ 15 cm, 6".

5. Procédé selon la revendication 1, dans lequel la bande métallique est une bande d'aluminium et avant de former le cylindre, la bande d'aluminium a une épaisseur d'environ 0,3 mm à 0,6 mm, 0,010" à 0,023", et une largeur d'environ 9,21 cm, 3 5/8" ; la dimension verticale entre les surfaces supérieure et inférieure adjacentes du cylindre ainsi formé est d'environ 7 mm, 0,27" ; la largeur des surfaces d'arêtes plates est d'environ 7 mm, 0,27", la distance entre les surfaces d'arêtes plates adjacentes est d'environ 7 mm, 0,27" ; la largeur des surfaces de rainures plates est d'environ 7 mm, 0,27", la distance entre les surfaces des rainures plates adjacentes est d'environ 7 mm, 0,27" ; et le diamètre du cylindre se situe dans la plage d'environ 41 cm à 61 cm, 16" à 24".

6. Procédé selon la revendication 1, dans lequel la bande métallique ondulée ainsi formée est symétrique de haut en bas.

7. Procédé selon la revendication 1, dans lequel la largeur des arêtes et des rainures, et l'espacement entre les arêtes adjacentes et entre les rainures adjacentes sont tous égaux.

8. Appareil pour former une bande métallique (10) en un mandrin cylindrique (20), comprenant :
une multiplicité de cages de formage de rouleaux de formage agencés de sorte que lorsqu'une bande métallique allongée ayant une largeur et une longueur et des bords longitudinaux opposés est passée à travers la multiplicité de cages de formage, la multiplicité de cages de formage forment des composants rectangulaires et des segments globalement droits de ceux-ci en ladite bande et modifient la taille et la forme des segments et des composants préalablement formés au niveau desdites cages de formage, dans lequel, à la fin du processus de formage d'ondulations, la bande a un profil à nervures rectangulaires qui comprend des arêtes (11) et des rainures (12) alternées s'étendant longitudinalement ayant des parois latérales espacées, globalement verticales, les arêtes (11) comprenant en outre des surfaces supérieures (13) espacées, plates, s'étendant longitudinalement s'étendant entre des parois latérales d'arêtes adjacentes et les rainures (12) comprenant en outre des surfaces inférieures (14) espacées, plates, s'étendant longitudinalement s'étendant entre les parois latérales des rainures adjacentes, les arêtes plates (11) et les rainures plates (12) formant ensemble un profil en coupe transversale à nervures plates rectangulaires s'étendant le long de la largeur de la bande transversalement à la longueur de celle-ci, dans lequel la multiplicité de cages de formage sont disposées pour former initialement des éléments rectangulaires et/ou des segments en ligne droite d'éléments rectangulaires et pour ajouter progressivement des éléments rectangulaires ou des segments en ligne droite aux éléments rectangulaires ou aux segments en ligne droite et affiner les éléments rectangulaires ou les segments en ligne droite pour former les arêtes et les rainures, chacune des cages de formage devant former des composants rectangulaires ou des segments globalement droits de ceux-ci en ladite bande ;
un moyen de formage des bords longitudinaux opposés de la bande métallique ondulée ainsi formée en collerettes (16, 17) adaptées pour former un joint de verrouillage (21) ;
un moyen d'enroulement hélicoïdal de la bande ondulée ainsi formée en un cylindre ayant un axe longitudinal et une surface extérieure définie par des surfaces espacées, plates, choisies parmi les surfaces supérieures (13) et les surfaces inférieures (14) ; et
un moyen de compression des collerettes (16, 17) de bords opposés les unes avec les autres, formant de la sorte un joint de verrouillage (21) s'étendant en spirale autour du cylindre le long de l'axe longitudinal de celui-ci.

9. Appareil selon la revendication 8, dans lequel la multiplicité des cages de formage des rouleaux de formage sont agencées de sorte que la bande métallique ondulée ainsi formée soit symétrique de haut en bas, ou dans lequel la largeur des arêtes et des rainures, et l'espacement entre les arêtes adjacentes et entre les rainures adjacentes sont tous égaux.
